# EUROPÄISCHE PATENTSCHRIFT

(11) **EP 0 492 340 B1**
(45) Veröffentlichungstag und Bekanntmachung des Hinweises auf die Patenterteilung: **08.02.1995**
(21) Anmeldenummer: 91121522.6
(22) Anmeldetag: 16.12.1991
(51) Int. Cl.: H01S 3/106, H01S 3/098, H01S 3/07, H01S 3/08, H01S 3/136

(54) **Gaslaser mit einer Verstellvorrichtung für ein Maschinenteil**
Gas laser with adjusting device for component
Laser à gaz avec un dispositif de réglage pour un composant

(30) Priorität: 24.12.1990 DE 4041815
(43) Veröffentlichungstag der Anmeldung: 01.07.1992
(73) Patentinhaber: TRUMPF LASERTECHNIK GmbH, D-71254 Ditzingen (DE)
(72) Erfinder: Prokop, Heinz Jürgen Dr. Ing., Midori-ku Yokohama Kana Gawa, 226 (JP); Häcker, Michael, Dipl. Ing., W-7257 Ditzingen (DE); Häfele, Karl-Eberhard Dipl. Ing., W-7334 Süssen (DE)
(74) Vertreter: Schmid, Berthold, Dipl.-Ing.

(56) Entgegenhaltungen:
- WO-A-86/02207
- US-A- 4 087 766
- PATENT ABSTRACTS OF JAPAN vol. 14, no. 154 (E-907)(4097) 23. März 1990 & JP-A-2 012 983

## Beschreibung

Der Resonatorraum eines Gaslasers ist der mit Lasergas gefüllte Raum zwischen den die Laserstrecke begrenzenden End- und Auskoppelspiegeln. Da der Druck des Lasergases nur ein Bruchteil vom Druck der Außenluft ist, muß der Resonatorraum gegenüber der Außenluft absolut abgedichtet sein. Solange keine beweglichen Teile zu berücksichtigen sind, ist eine solche Abdichtung problemlos herzustellen und aufrechtzuerhalten. Nun stellt sich aber vielfach die Aufgabe, Maschinenteile innerhalb des Resonatorraumes zu verstellen, beispielsweise eine Modenblende, die Spiegel oder das Einbringen eines Shutters. Es sind eine Reihe von Lösungen bekannt, die von außen in den Resonatorraum hineinragenden Teile des Verstellantriebes abzudichten, jedoch ist dies mit einem erheblichen Herstellungsaufwand verbunden und außerdem können sich Reibungs- und Leckverluste ergeben.

Die Aufgabe der vorliegenden Erfindung ist es, bei einem Gaslaser mit einem längs der Innenseite einer Wand des Resonatorraumes verstellbaren Maschinenteil eine Verstellvorrichtung zu schaffen, bei welcher keinerlei Durchbrechung der Wände des Resonatorraumes erforderlich ist. Zur Lösung dieser Aufgabe wird erfindungsgemäß vorgeschlagen, einen Gaslaser gemäß dem Oberbegriff des Hauptanspruches entsprechend seinem kennzeichnenden Teil auszubilden.

Ein Gaslaser mit einer Verstellvorrichtung für eine verstellbare Blende gemäß dem Oberbegriff des Hauptanspruches ist aus US-A-4 087 766 bekannt.

Der an der Außenseite angeordnete Mitnehmer und das innerhalb des Resonatorraumes befindliche Maschinenteil werden durch die nicht oder schwach magnetisierbare Wand hindurch durch die Magnetkraft so gekoppelt, daß eine Bewegung des Mitnehmers auch das Maschinenteil verstellt. Infolgedessen sind hinsichtlich der Abdichtung nur die Anforderungen zu stellen, die sich bei einem Gaslaser ohne bewegliche Teile im Resonatorraum ergeben. Hierdurch werden sowohl die Herstellung vereinfacht und verbilligt als auch Leckverluste beim Gas nahezu ausgeschlossen. Bei der zweckmäßigsten Lösung ist der Mitnehmer als Magnet ausgebildet und besteht das Maschinenteil mindestens teilweise aus magnetisierbarem Werkstoff, wobei der entsprechende Teilbereich möglicht nah an der Innenwand liegen sollte. Selbstverständlich ist auch die umgekehrte Lösung möglich oder aber eine Verwendung von Magneten in beiden Teilen, welche entsprechend gepolt sein müssen.

Führungseinrichtungen sind für das Maschinenteil an der Innenseite und für den Mitnehmer an der Außenseite der Wand vorgesehen, um die Lage dieser Teile insbesondere zueinander und zum Laserstrahl sicher zu gewährleisten.

Der Durchmesser eines Laserstrahls wird durch die aktive Spiegelfläche vom Auskoppel- bzw. Endspiegel bestimmt. Wesentliche Eigenschaften des Laserstrahls, wie die Divergenz und Mode, werden u.a. von dem Verhältnis Strahldurchmesser zur Laserlänge beeinflußt. Da die Laserlänge bei einem vorgegebenen Laser konstant ist, läßt sich nur der Strahldurchmesser durch Verringerung der aktiven Spiegelfläche verändern. Dies wird durch das Einschieben einer Modenblende vor den Spiegel erreicht. Als Maschinenteil wird daher nach einem weiteren Merkmal der Erfindung eine Modenblende zur Begrenzung des Laserstrahlquerschnittes verwendet. Die Modenblende ist durch einen Ring mit kreisförmigem Querschnitt gebildet, wobei der Ring als nicht magnetisierbarer Innenring in einem magnetisierbaren Außenring gelagert ist. Das magnetische Kraftfeld des Mitnehmers wirkt dabei ausschließlich auf den Außenring ein und verstellt bei seiner Verschiebung die gesamte Modenblende. Zweckmäßigerweise ist die Führungseinrichtung für die Modenblende als Abrollfläche und die für den als Magnet ausgebildeten Mitnehmer als Gleitfläche an der Wand der Resonatorraumes gestaltet.

Um den Mitnehmer und damit das Maschinenteil in die gewünschte Lage zu bringen, ist nach einem weiteren Merkmal der Erfindung ein Zylinderantrieb vorgesehen, welcher durch eine entsprechende Steuervorrichtung beeinflußt wird. Um den Laserstrahl im gewünschten Maße zu verändern, ist es erforderlich, daß die Modenblende im Hinblick auf den Strahl zumindest in ihrer wirksamen Stellung genau festgelegt wird. Hierzu verwendet man zweckmäßigerweise einen verstellbaren Anschlag, der möglichst in zwei senkrecht zueinander liegenden Richtungen verstellt werden kann. Auch für die unwirksame Stellung des Maschinenteils, insbesondere der Modenblende, ist ein Anschlag vorgesehen, um beispielsweise zu verhindern, daß die Modenblende noch in den Strahlengang hineinragt. Bei einer besonders einfachen Ausführungsform kann die Anschlagvorrichtung für die Modenblende als Führungseinrichtung für diese ausgebildet sein.

Bei einem gefalteten Gaslaser ist es zweckmäßig, die Verstellvorrichtung für zwei Modenblenden auszubilden, von denen sich die eine vor dem End- und die andere vor dem Auskoppelspiegel befindet.

Die Zeichnung zeigt Ausführungsbeispiele der Erfindung. Es stellen dar:
- Fig. 1: einen schematischen Längsschnitt durch einen gefalteten Glaslaser mit zwei außer Eingriff befindlichen Modenblenden,
- Fig. 2: eine Darstellung gemäß Fig. 1 mit zwei innerhalb des Laserstrahls befindlichen Modenblenden,
- Fig. 3: einen abgebrochenen Querschnitt eines Gaslasers mit einer Modenblende,
- Fig. 4: einen Schnitt IV-IV nach Fig. 3.

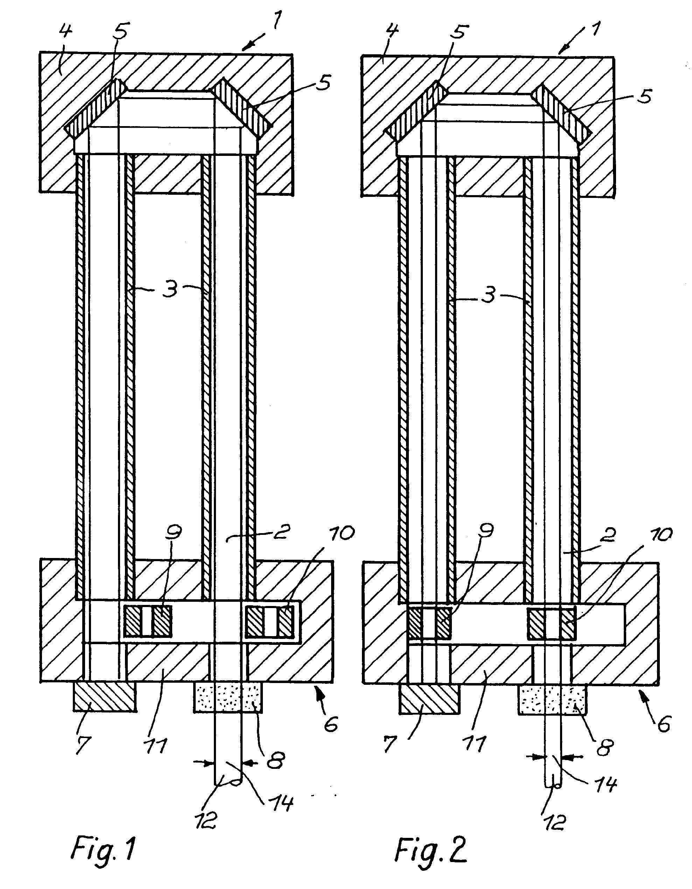

Wie die Fign. 1 und 2 erkennen lassen, weist der gefaltete Gaslaser 1 einen Resonatorraum 2 auf, welcher durch die Laserrohre 3 im Umlenkblock 4 mit den Umlenkspiegeln 5, das Resonatorgehäuse 6 sowie den Endspiegel 7 und den Auskoppelspiegel 8 begrenzt wird. Im Resonatorgehäuse 6 sind zwei Modenblenden 9 und 10 vorgesehen, welche innerhalb des Gehäuses längs der Wand 11 verstellt werden können. Der Laserstrahl 12 kann durch die beiden Modenblenden 9, 10, in seinem Durchmesser 14 verkleinert werden. Nachdem sich die Modenblenden 9, 10 in Fig. 1 außerhalb des Laserstrahls 12 befinden, kann dieser ungehindert mit vollem Durchmesser am Auskoppelspiegel 8 austreten. In Fig. 2 dagegen befinden sich beide Modenblenden 9, 10 im Strahlengang, so daß der Durchmesser des Laserstrahls 8, wie die Zeichnung erkennen läßt, etwa um die Hälfte verringert wird.

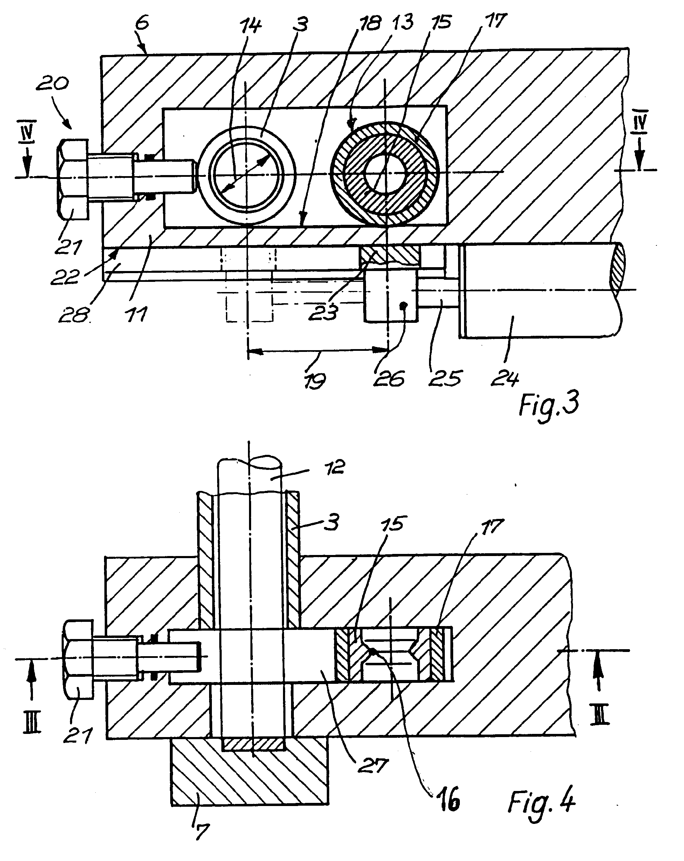

Der Aufbau der Modenblenden und ihre Verstellvorrichtung sind in den Fign. 3 und 4 dargestellt. Die Modenblende 13 besteht aus einem nicht magnetisierbaren Innenring 15 mit Einschnürungen 16, welcher in einem magnetisierbaren Außenring 17 gelagert ist. Die Modenblende 13 kann an der Innenseite 18 der Wand 11 des Resonatorgehäuses 6 innerhalb des Verstellbereiches 19 hin und her verschoben werden, wobei die Modenblende 13 an der Innenseite 18 in einer Blendenführung 27 abrollt. In den Fign. 3 und 4 befindet sich die Modenblende 13 außerhalb des Laserstrahls 12 in ihrer unwirksamen Lage. Wenn sie in die entgegengesetzte Stellung in den Bereich des Laserstrahls 12 gerollt wird, trifft sie auf einen Endanschlag 20, welcher aus einem in Längsrichtung verstellbaren Bolzen 21 besteht. Durch die entsprechende Einstellung dieses Anschlages 20 wird eine genaue Zentrierung der Modenblende 13 in Bezug auf den Laserstrahl 12 erreicht.

An der Außenseite 22 der Wand 11 ist eine Mitnehmerführung 28 mit Gleitfläche vorgesehen, an welcher ein als Magnet ausgebildeter Mitnehmer 23 anliegt. Die Länge des Mitnehmers 23 entspricht etwa dem Durchmesser des Außenrings 17 der Modenblende 13 und die Breite der beiden Teile ist gleich. Zur Längsverschiebung des Mitnehmers 23 ist ein Zylinderantrieb 24 vorgesehen, auf dessen Kolbenstange 25 ein Zwischenstück 26 befestigt ist, an welchem sich der Mitnehmer 23 befindet. Wie die strichpunktierte Darstellung in Fig. 3 erkennen läßt, kann der Mitnehmer 23 so weit in Richtung der Anschlagvorrichtung 20 verschoben werden, bis die durch das magnetische Kraftfeld mitverstellte Modenblende 13 an diesem Anschlag anliegt. Wie die Zeichnung erkennen läßt, ist für die Verstellung der Modenblende 13 keinerlei Durchbruch im Resonatorgehäuse 6 erforderlich, so daß sich insoweit auch keine Dichtungsprobleme ergeben.

## Patentansprüche

1. Gaslaser mit einer Verstellvorrichtung für eine längs der Innenseite einer Wand des Resonatorraumes des Lasers verstellbare Blende wobei die Wand (11) wenigstens im Verstellbereich (19) der Blende (9, 10, 13) aus einem nicht oder schwach magnetisierbaren Material besteht und an ihrer Außenseite (22) ein Mitnehmer (23) im Verstellbereich (19) verschiebbar gelagert ist, die Blende (9, 10, 13) oder der Mitnehmer (23) einen Magneten aufweisen und das jeweils andere Teil mindestens teilweise aus magnetisierbarem oder magnetischem Werkstoff besteht und für die Blende (9, 10, 13) an der Innenseite (18) und für den Mitnehmer (23) an der Außenseite (22) der Wand (11) Führungseinrichtungen (27, 28) vorgesehen sind, dadurch gekennzeichnet, daß die Blende eine Modenblende (9, 10, 13) zur Begrenzung des Laserstrahldurchmessers (14) ist, welche durch einen Ring (15) mit kreisförmigem Querschnitt gebildet ist, wobei der Ring als nicht magnetisierbarer Innenring (15) in einem magnetisierbaren Außenring (17) gelagert ist, und daß die Führungseinrichtung für die Modenblende (13) als Abrollfläche (18) ausgebildet ist.

2. Laser nach Anspruch 1, dadurch gekennzeichnet, daß die Führungseinrichtung für den als Magnet ausgebildeten Mitnehmer (13) eine Gleitfläche (22) an der Wand (11) ist.

3. Laser nach Anspruch 1 oder 2, gekennzeichnet durch einen Zylinderantrieb (24) für den Mitnehmer (23).

4. Laser nach einem oder mehreren der vorhergehenden Ansprüche, dadurch gekennzeichnet, daß der Verstellbereich (19) für die Modenblende (13) insbesondere beiderseits durch Anschläge (20) für eine wirksame und unwirksame Stellung begrenzt ist.

5. Laser nach einem der vorhergehenden Ansprüche, dadurch gekennzeichnet, daß die Modenblende (13) in der einen Anschlagstellung im Strahlengang des Lasers (12) und in der anderen außerhalb desselben liegt.

6. Laser nach einem oder beiden der Ansprüche 4 oder 5, dadurch gekennzeichnet, daß mindestens der Anschlag (20) für die wirksame Stellung der Modenblende (13), insbesondere in zwei zu einander senkrechten Richtungen, verstellbar ausgebildet ist.

7. Laser nach einem oder mehreren der Ansprüche 4 bis 6, dadurch gekennzeichnet, daß die Anschlagvorrichtung als Führungseinrichtung für die Modenblende (13) ausgebildet ist.

8. Gefalteter Gaslaser nach einem oder mehreren der vorangehenden Ansprüche, dadurch gekennzeichnet, daß die Verstellvorrichtung für zwei Modenblenden (9, 10) ausgebildet ist, von denen sich eine vor dem End- (7) und die andere vor dem Auskoppelspiegel (8) befindet.

## Claims

1. Gas laser having a moving device for a screen which can be moved along the inner side of a wall of the resonator chamber of the laser, the wall (11) consisting at least in the area of movement (19) of the screen (9, 10, 13) of a material which is non-magnetisable or only weakly magnetisable, and an entrainment device (23) being displaceably mounted in the area of movement (19) on the outer side (22) of the wall, the screen (9, 10, 13) or the entrainment device (23) comprising a magnet and the other part in each case consisting at least partially of magnetisable or magnetic material, and guide devices (27, 28) being provided for the screen (9, 10, 13) on the inner side (18) and for the cam (23) on the outer side (22) of the wall (11), characterised in that the screen is a mode screen (9, 10, 13) for restricting the laser beam diameter (14) and which is formed by a ring (15) having a circular cross-section, the ring being mounted as a non-magnetisable inner ring (15) in a magnetisable outer ring (17); and in that the guide device for the mode screen (13) is formed as a rolling surface (18).

2. Laser according to Claim 1, characterised in that the guide device for the entrainment device (23) in the form of a magnet is a slide surface (22) on the wall (11).

3. Laser according to Claim 1 or 2, characterised by a cylinder drive (24) for the entrainment device (23).

4. Laser according to one or more of the preceding claims, characterised in that the area of movement (19) for the mode screen (13) is delimited in particular on both sides by stops (20) for an active and an inactive position.

5. Laser according to any one of the preceding claims, characterised in that the mode screen (13) lies in one stop position in the beam path of the laser (12) and in the other outside of the latter.

6. Laser according to one or both of Claims 4 and 5, characterised in that at least the stop (20) is formed so as to be movable for the active position of the mode screen (13), in particular movable in two directions perpendicular to one another.

7. Laser according to one or more of Claims 4 to 6, characterised in that the stop device is in the form of a guide device for the mode screen (13).

8. Folded gas laser according to one or more of the preceding claims, characterised in that the moving device is formed for two mode screens (9, 10) of which one is located in front of the coupling mirror (7) and the other is located in front of the uncoupling mirror (8).

## Revendications

1. Laser à gaz avec un dispositif de réglage pour un diaphragme déplaçable le long de la face interne d'une paroi de l'espace du résonateur du laser, la paroi (11) étant composée, au moins dans la zone de réglage (19) du diaphragme (9, 10, 13), d'un matériau non ou faiblement aimantable, et un toc d'entraînement (23) étant monté sur sa face externe (22) de manière à pouvoir être déplacé dans la zone de réglage (19), le diaphragme (9, 10, 13) ou le toc d'entraînement (23) présentant un aimant et l'autre élément étant composé d'un matériau au moins partiellement aimantable ou aimanté, et des dispositifs de guidage (27, 28) étant prévus pour le diaphragme (9, 10, 13) sur la face interne (18) et pour le toc d'entraînement (23) sur la face externe (22) de la paroi (11), caractérisé en ce que le diaphragme est un diaphragme de modes (9, 10, 13) pour délimiter le diamètre du rayon laser (14), qui est formé par une bague (15) de section transversale circulaire, la bague étant montée en tant que bague intérieure non aimantable (15) dans une bague extérieure aimantable (17), et en ce que le dispositif de guidage pour le diaphragme de modes (13) est réalisé sous forme de surface de roulement (18).

2. Laser selon la revendication 1, caractérisé en ce que le dispositif de guidage pour le toc d'entraînement (23) réalisé en tant qu'aimant est une surface de glissement (22) sur la paroi (11).

3. Laser selon la revendication 1 ou 2, caractérisé par une commande par vérin (24) pour le toc d'entraînement (23).

4. Laser selon l'une ou plusieurs des revendications précédentes, caractérisé en ce que la zone de réglage (19) pour le diaphragme de modes (13) est notamment délimité de part et d'autre par des butées (20) pour une position active et inactive.

5. Laser selon l'une des revendications précédentes, caractérisé en ce que le diaphragme de modes (13) se situe, dans une position de butée, dans le rayon du laser (12) et, dans l'autre position de butée, en dehors de celui-ci.

6. Laser selon l'une des revendications ou les deux revendications 4 et 5, caractérisé en ce qu'au moins la butée (20) pour mettre le diaphragme de modes (13) en position active est réalisée de manière à pouvoir être notamment déplacée dans deux directions perpendiculaires l'une par rapport à l'autre.

7. Laser selon l'une ou plusieurs des revendications 4 à 6, caractérisé en ce que le dispositif d'arrêt est réalisé en tant que dispositif de guidage pour le diaphragme de modes (13).

8. Laser à gaz en trombone selon l'une ou plusieurs des revendications précédentes, caractérisé en ce que le dispositif de réglage est conçu pour deux diaphragmes de modes (9, 10) dont l'un se trouve devant le miroir d'extrémité (7) et l'autre devant le miroir de sortie (8).
